# EUROPEAN PATENT SPECIFICATION

(11) **EP 4 596 182 B1**
(45) Date of publication and mention of the grant of the patent: **29.07.2026**
(21) Application number: 25155172.7
(22) Date of filing: 31.01.2025
(51) Int. Cl.: B25J 9/16, B05B 12/12, B05B 13/04

(54) **PAINTING ROBOT**
LACKIERROBOTER
ROBOT DE PEINTURE

(30) Priority: 05.02.2024 JP 2024015823
(43) Date of publication of application: 06.08.2025
(73) Proprietor: ABB SCHWEIZ AG, 5400 Baden (CH)
(72) Inventor: IIDA, Kisumi, Shinagawa-ku, 1416022 (JP)
(74) Representative: Zimmermann & Partner Patentanwälte mbB

(56) References cited:
- WO-A1-2021/205537
- CN-A- 115 709 152
- US-A- 5 240 745

## Description

### [Technical Field]

The present invention relates to a painting robot.

### [Background Art]

Robot painting employing robots has become the norm on painting lines for painting vehicles such as automobiles. Robot painting employs a painting robot having a painting head, which comprises multiple rows of nozzles, mounted to a tip end of a multi-joint robot. Patent Document 1 describes a painting line for painting vehicles such as automobiles, wherein painting is performed by using a painting robot having an inkjet-type painting head. Painting is preferably performed by the painting robot with a direction of advance of the painting head kept perpendicular to a longitudinal direction thereof. Patent Document 2 describes a painting robot comprising an elongate painting head for painting an object being painted while moving in a predetermined direction, the painting head having a plurality of nozzle rows formed by a plurality of nozzles for ejecting paint. Painting head inclination is changed based on the size of the object being painted. Patent Document 3 discloses a robot for painting cars.

### [Prior Art Documents]

### [Patent Documents]

[Patent Document 1] WO 2021/205537 A1
[Patent Document 2] CN 115 709 152 A
[Patent Document 3] US 5 240 745

### [Summary of the Invention]

### [Problems to be Solved by the Invention]

When the longitudinal direction of the painting head is perpendicular to a painting direction, however, it may not be possible to bring a nozzle face of the painting head sufficiently close to the object being painted if the painting head is moved during painting in order to avoid interference between the painting head and any obstructions, especially in areas where the obstructions are close, etc. As a result, a painting distance from the painting head may become greater in those areas, potentially leading to a drop in painting resolution such that the desired painting quality can no longer be achieved.

The present invention has been devised in light of this situation, and the objective thereof lies in providing a painting robot capable of maintaining painting quality at locations where the nozzle face cannot be brought sufficiently close to an object being painted.

### [Means for Solving the Problems]

The invention is set out in the appended set of claims.

### [Effects of the Invention]

The present invention makes it possible to provide a painting robot capable of maintaining painting quality also at locations where a nozzle face cannot be brought sufficiently close.

### [Brief Description of the Drawings]

[Fig. 1] Fig. 1 is a schematic configuration diagram showing a schematic configuration of a painting robot according to the embodiment.
[Fig. 2] Fig. 2 is a diagram showing a state in which a nozzle-forming face of a painting head in fig. 1 from which paint is ejected is seen from a front face.
[Fig. 3] Fig. 3 is a flowchart showing control performed by a main control unit of the painting robot according to the embodiment.
[Fig. 4] Fig. 4 is an explanatory diagram to illustrate an object being painted, which is the subject of painting by the painting robot according to the embodiment, and a main scanning direction.
[Fig. 5] Fig. 5 is a schematic diagram to illustrate a situation in which the painting head of the painting robot according to the embodiment is painting the object being painted.
[Fig. 6] Fig. 6 is a schematic diagram to illustrate a situation in which the painting head of the painting robot according to the embodiment is painting the object being painted while tilt control is performed.
[Fig. 7] Fig. 7 is an outline diagram showing the effect afforded by tilt control of the painting head of the painting robot according to the embodiment. A shows without tilt control, and B shows with tilt control.
[Fig. 8] Fig. 8 is an explanatory diagram showing, in a simplified manner, the form in which paint from a first painting head of the painting robot according to the embodiment lands, depending on whether or not tilt control is performed.
[Fig. 9] Fig. 9 is an explanatory diagram showing how painting resolution is affected by performing or not performing tilt control of the first painting head of the painting robot according to the embodiment.
[Fig. 10] Fig. 10 is an explanatory diagram showing, in a simplified manner, the form in which paint from a second painting head of the painting robot according to the embodiment lands, depending on whether or not tilt control is performed.
[Fig. 11] Fig. 11 is an explanatory diagram showing how painting resolution is affected by performing or not performing tilt control of the second painting head of the painting robot according to the embodiment.
[Fig. 12] Fig. 12 is an outline diagram of the object being painted, showing the effect of tilt control of the first painting head and the second painting head of the painting robot according to the embodiment.
[Fig. 13] Fig. 13 is an outline diagram of the object being painted, showing the effect of tilt control of the first painting head and the second painting head of the painting robot according to the embodiment.

### [Embodiments of the Invention]

A painting robot 10 according to the embodiment will be described below with reference to the drawings.

### [Painting robot]

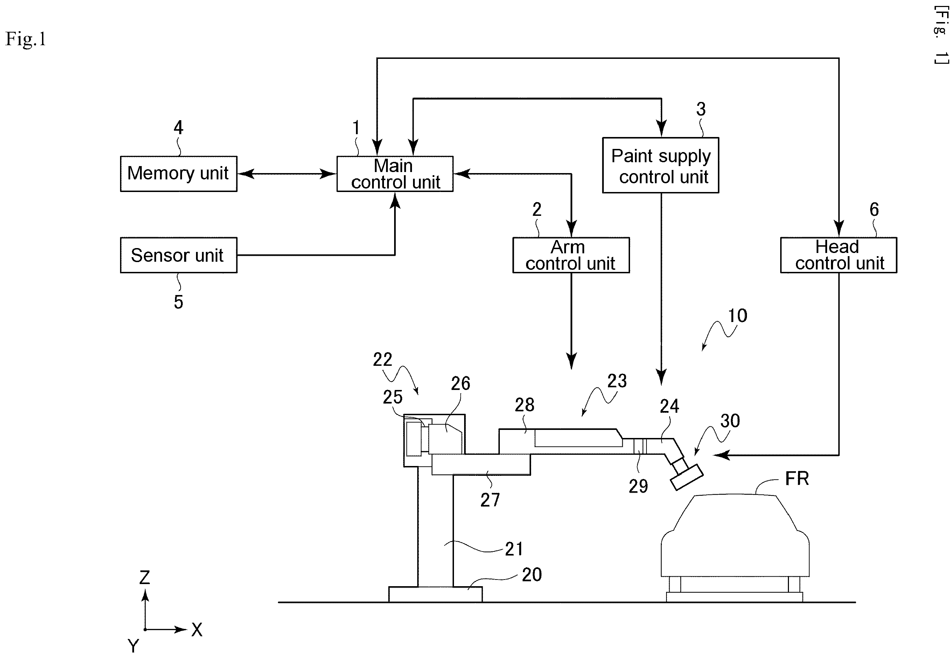

Fig. 1 is a schematic configuration diagram showing a schematic configuration of the painting robot 10 according to the embodiment. The painting robot 10 is arranged in the vicinity of a painting line in an automobile production plant and paints vehicle bodies FR which are conveyed along the painting line. The vehicle body FR of an automobile is described as an example of an object being painted in the embodiment, but the object being painted may equally be an object other than the vehicle body FR of an automobile.

The painting robot 10 paints the vehicle body FR which is conveyed on the painting line from an upstream side. In a painting process, the vehicle body FR may be painted as it moves along the painting line, or the flow of the line may be stopped at a predetermined position to paint the vehicle body FR. The vehicle body FR which has been painted by means of the painting robot 10 is conveyed toward a downstream side of the painting line.

The painting robot 10 is depicted, by way of example, as having a tip end portion 24 capable of pivoting in directions centred on three axes, namely an X axis, a Y axis and a Z axis, but the tip end portion 24 may pivot about any one of the X axis, Y axis and Z axis, or may pivot about two of those axes.

The painting is carried out for the purpose of forming a paint film on a surface of the object being painted, in order to protect the surface and to impart an attractive appearance. The painting process may involve simply painting using a paint having a specific colour or a paint having a specific function, but also includes successively overcoating paints having multiple colours or paints having specific functions.

The painting robot 10 is illustrated as a multi-joint robot, but may equally be a SCARA robot, provided that it is capable of painting. As shown in fig. 1, the painting robot 10 comprises: a stand 20, a leg portion 21, a rotational drive unit 22, a robot arm 23, the tip end portion 24, and a painting head 30.

The stand 20 is a fixing member for fixing the painting robot 10 to a floor surface of the painting line and supporting the painting robot 10. The stand 20 may be movable over the floor surface of the painting line.

The leg portion 21 has a lower portion fixed to the stand 20 and an upper portion connected to the rotational drive unit 22, and extends to a vertical height suitable for painting to be performed by the painting robot 10.

The rotational drive unit 22 is connected to an upper end of the leg portion 21 and comprises a rotary shaft portion 25 and a rotating arm 26. The rotary shaft portion 25 causes the rotating arm 26 to rotate by means of a motor (not depicted) about a direction parallel to the floor surface (the X axis direction shown in fig. 1). The rotating arm 26 causes the robot arm 23 connected to the rotating arm 26 to rotate with a straight line orthogonal to the centre of rotation of the rotary shaft portion 25 (the Z axis direction shown in fig. 1) serving as a rotational centre.

The robot arm 23 comprises a first pivoting arm 27 and a second pivoting arm 28. The first pivoting arm 27 is connected to the rotating arm 26 at one end portion and connected to the second pivoting arm 28 at another end portion. The first pivoting arm 27 is pivoted by means of a motor (not depicted) mounted on the rotating arm 26, with the Z axis direction shown in fig. 1 serving as a centre of pivoting. The second pivoting arm 28 is connected to the first pivoting arm 27 at one end portion and has a wrist portion 29 (to be described later) at another end portion. The second pivoting arm 28 is pivoted by means of a motor (not depicted), with the Z axis direction shown in fig. 1 serving as a centre of pivoting.

The tip end portion 24 is disposed at a tip end side of the painting robot 10 and sprays the vehicle body FR of the automobile with paint. The wrist portion 29 is held between the tip end portion 24 and the second pivoting arm 28. The wrist portion 29 causes the tip end portion 24 to pivot about at least one of the three axes (X axis, Y axis and Z axis) shown in fig. 1. The tip end portion 24 comprises the painting head 30 at a tip end thereof.

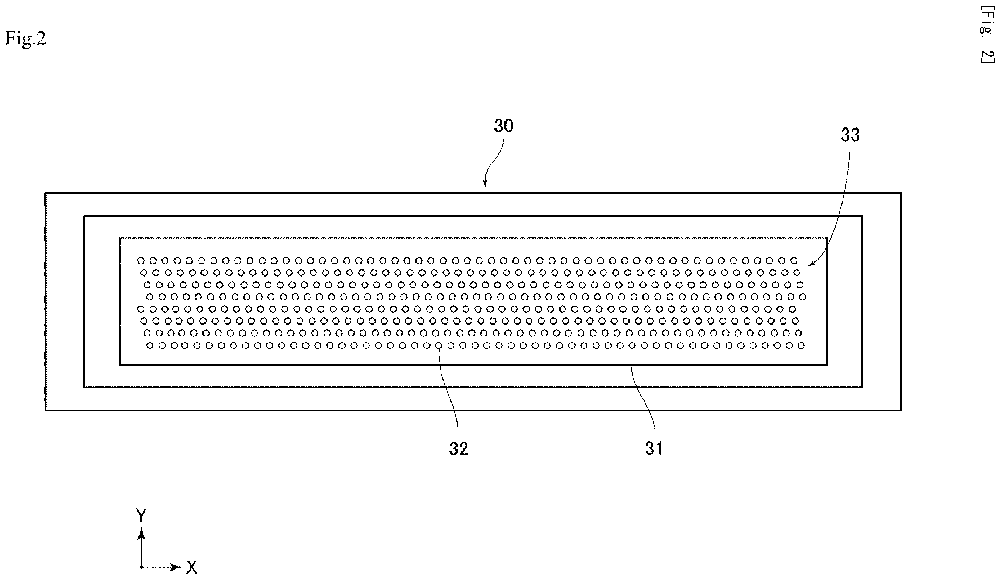

The painting head 30 sprays the vehicle body FR moving over the painting line with paint at a suitable timing. Fig. 2 is a diagram showing a state in which a nozzle-forming face 31 of the painting head 30 from which paint is ejected is seen from a front face. A plurality of nozzle rows 33 comprising multiple nozzles 32 are arranged in lines with fixed regularity on the nozzle-forming face 31. The painting head 30 forms a paint film on the vehicle body FR constituting an object CM being painted, by spraying paint at a suitable timing from the nozzles 32. As shown in fig. 1, the painting head 30 is pivotable about a centre axis while mounted on the tip end portion 24. Pivoting, i.e., tilting, of the painting head 30 will be described later.

The various members described above which constitute the painting robot 10 operate on the basis of commands from a control unit. The control unit comprises: a main control unit 1, an arm control unit 2, a paint supply control unit 3, a memory unit 4, a sensor unit 5, and a head control unit 6.

The main control unit 1 controls movement of the painting robot 10 and paint supply by sending signals to the arm control unit 2, the paint supply control unit 3 and the head control unit 6 on the basis of signals sent from the memory unit 4 and the sensor unit 5.

The arm control unit 2 controls movement from the rotational drive unit 22 as far as the robot arm 23 on the basis of signals from the main control unit 1. The arm control unit 2 causes the painting robot 10 to move to a desired painting position, and causes the painting head 30 to move in a main scanning direction during painting.

The paint supply control unit 3 performs drive control of a pump and a flow path changeover valve, etc. which are installed along a paint circulation pathway of the painting robot 30, on the basis of signals from the main control unit 1.

The head control unit 6 controls an angle of the painting head 30 mounted at the tip end of the tip end portion 24, on the basis of signals from the main control unit 1. Angle control is control to change only an orientation of the painting head 30 without changing the main scanning direction, and is referred to as tilt control. Note that tilt control will be described later.

The memory unit 4 stores the shape of the vehicle body FR moving over the line, and supplies the data which is currently required by the main control unit 1 from data which has been stored in the past, so that the painting head 30 does not interfere with the vehicle body FR. Furthermore, the memory unit 4 stores a relationship between the tilt angle of the painting head 30 currently being used and painting resolution, and supplies the required data in accordance with a request from the main control unit 1.

The sensor unit 5 constantly monitors proximity of the painting head 30 to obstructions. The sensor unit 5 ascertains a distance between and relative positions of the painting head 30 and any obstructions, etc., by means of an infrared sensor, processing of images obtained by a camera, or a millimetre wave radar, etc., for example. The sensor unit 5 sends to the main control unit 1 information relating to the obstructions, and the arm control unit 2 and the head control unit 6 are controlled on the basis of signals calculated by the main control unit 1.

### [Control flow]

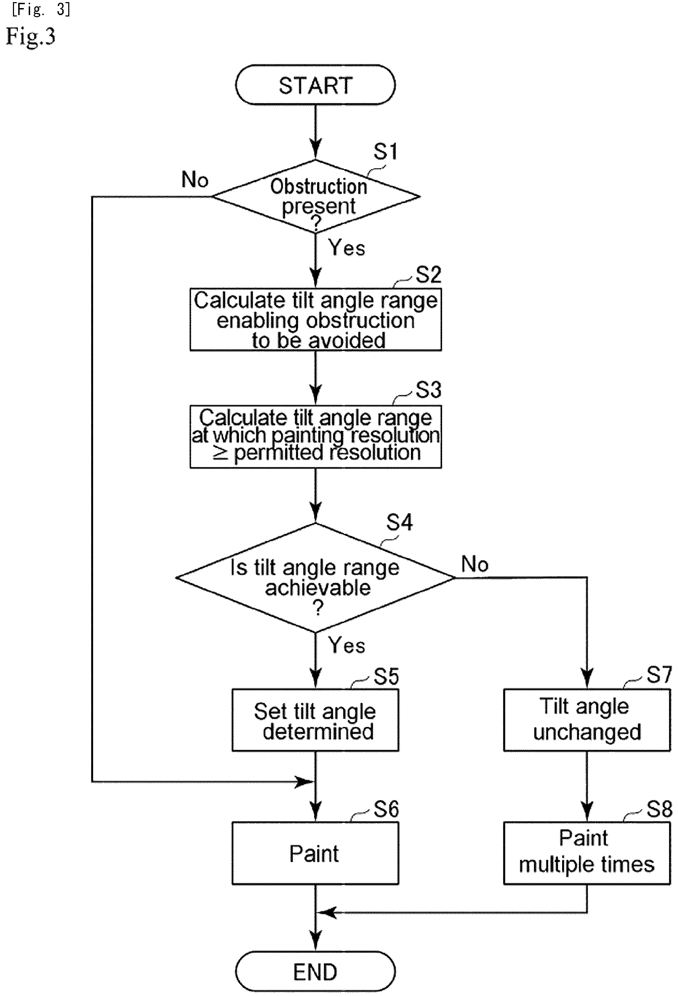

The control flow of the painting robot 10 will be described next with reference to fig. 3. Fig. 3 is a flowchart showing control performed by the main control unit 1 of the painting robot 10 according to the embodiment.

In step S1, the main control unit 1 determines whether or not there is an obstruction that will interfere with the painting head 30, ahead of the painting head 30 in the main scanning direction, on the basis of content sensed by the sensor unit 5 and obstruction position information stored in the memory unit 4.

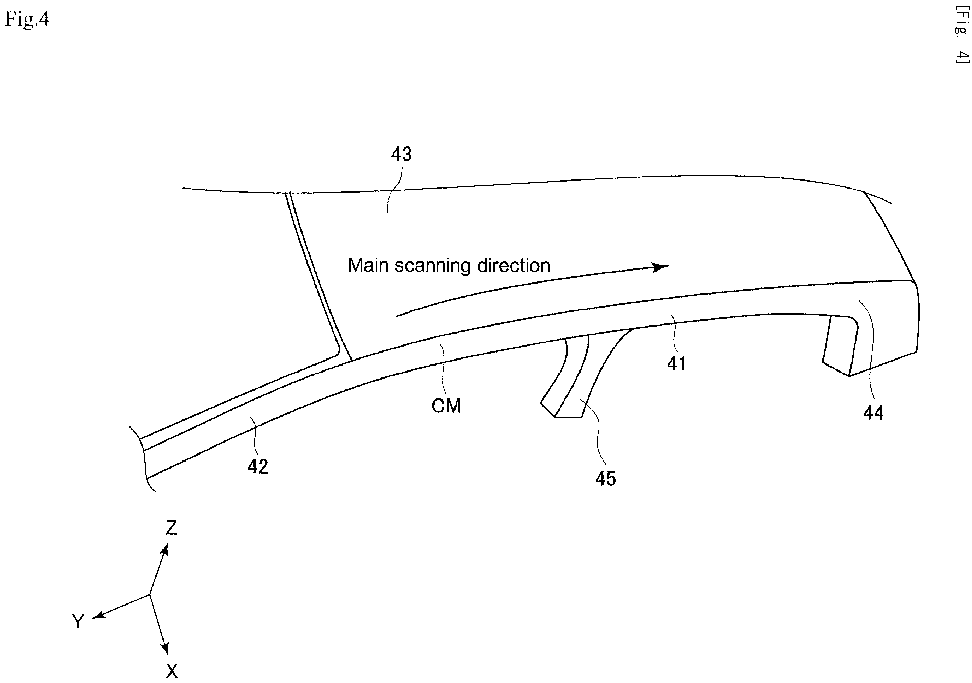

The obstruction may be an object which will interfere with progression of the painting head 30, such as a B-pillar 45 (see fig. 4), where the vehicle body FR is the example. If there is deemed to be no obstruction in step S1, the processing advances to step S6, where the main control unit 1 paints that location only once and terminates the processing.

In step S2, the main control unit 1 calculates a tilt angle range that will enable the obstruction to be avoided. In the same way as in step S1, the main control unit 1 calculates, on the basis of the content sensed by the sensor unit 5 and the obstruction position information stored in the memory unit 4, a tilt angle range that will enable the obstruction to be avoided, depending on the current distance between the painting head 30 and the object CM being painted, and the shape of the obstruction, etc. The tilt angle range may be a single angle.

In step S3, the main control unit 1 calculates a tilt angle range in which the painting resolution will be equal to or greater than a permitted resolution. The main control unit 1 calculates the tilt angle range in which the painting resolution will be equal to or greater than the permitted resolution from within the angular range of tilt angles calculated in step S2. The permitted resolution is a resolution sufficient to be capable of satisfying the required specification, and is set in advance by means of experimentation, etc.

For example, a relationship between nozzle arrangement and tilt angle may also be stored in advance as data in the memory unit 4. A method for calculating the painting resolution from the relationship between nozzle arrangement and tilt angle will be described later.

In step S4, the main control unit 1 determines whether or not there is a tilt angle at which the painting resolution will be equal to or greater than the permitted resolution, from within the tilt angle range calculated in step S3. Depending on the positional relationship of the painting head 30 and the obstruction, there may also be cases in which there is no tilt angle of the painting head 30 that will enable the painting resolution to be maintained while also avoiding the obstruction, so the main control unit 1 confirms whether or not such a case applies in this step.

In step S5, the main control unit 1 sets the tilt angle of the painting head 30 at the tilt angle determined in step S4. It should be noted that the control performed in steps S2-S5 so that the main control unit 1 tilts the angle of the painting head 30 by way of the head control unit 6 is referred to as "tilt control". In the tilt control, the painting head 30 is pivoted, i.e., tilted, about an axis which is perpendicular to the main scanning direction and which does not coincide with a longitudinal direction of the painting head 30.

It should be noted that setting of the tilt angle of the painting head 30 by means of the calculations from steps S2 to S5 above is referred to as "tilt control".

In step S6, the main control unit 1 sends, via the paint supply control unit 3, an instruction to paint in the relevant location to the painting head 30 having the tilt angle which was set in step S5. The painting in this case may be performed only once in the same way as painting elsewhere in order to maintain the desired painting quality.

It should be noted that "painting" as referred to here means, for example, painting once while the painting head is moved in the main scanning direction along a roof rail 41, and includes painting while the painting head 30 is tilted by means of tilt control when there is an obstruction such as the B-pillar 45 partway along. Furthermore, painting may also be performed by a procedure in which painting is performed while moving the painting head 30 in the main scanning direction to start with, postponing only those parts requiring tilt control, and then performing painting with tilt control only in the areas close to the obstruction which were postponed.

Meanwhile, in step S7, the main control unit 1 determines that there is no tilt angle at which the painting resolution will be equal to or greater than the permitted resolution in step S4, and therefore the main control unit 1 does not change the tilt angle of the painting head 30.

In step S8, the main control unit 1 sends a signal to the paint supply control unit 3 to make the painting head 30 paint the relevant location multiple times, and then terminates the processing. Even if the painting resolution does not reach the permitted resolution with a single painting operation, the permitted resolution can be achieved by performing painting twice or more. The number of times painting is performed varies according to the original painting resolution and the shape of the object CM being painted, etc.

### [Operation of the painting head]

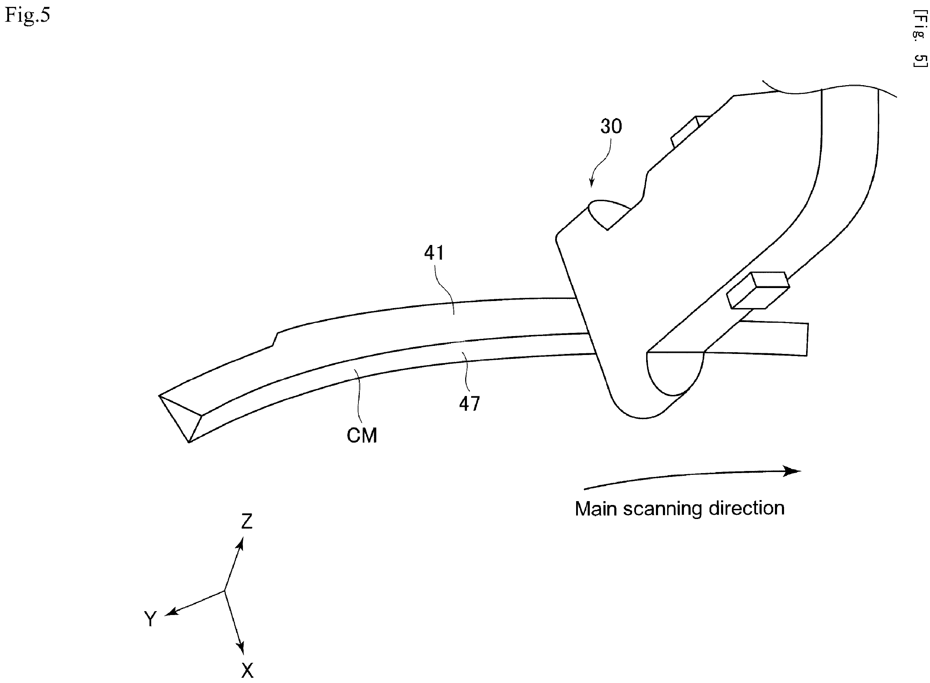

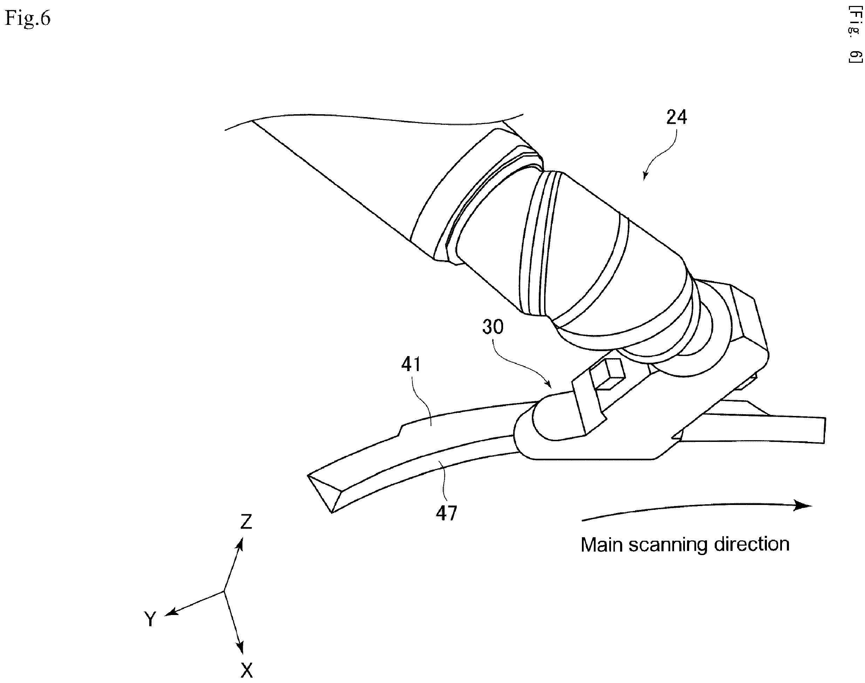

Painting of the vehicle body FR by means of the painting head 30 will be described next with reference to fig. 4-6. Fig. 4 is an explanatory diagram to illustrate the object CM being painted, which is the subject of painting by the painting robot 10 according to the embodiment, and the main scanning direction. Fig. 5 is a schematic diagram to illustrate a situation in which the painting head 30 of the painting robot 10 according to the embodiment is painting the object CM being painted. Fig. 6 is a schematic diagram to illustrate a situation in which the painting head 30 of the painting robot 10 according to the embodiment is painting the object CM being painted while tilt control is performed.

As shown in fig. 4, the object CM being painted, which is the subject of painting by the painting head 30, is the vehicle body FR of an automobile. The embodiment describes an exemplary case of painting the roof rail 41 in particular of the vehicle body FR, but parts other than the roof rail 41 may equally be painted, and the object CM being painted may also be an object other than the vehicle body FR.

In order to paint the vehicle body FR, the painting head 30 performs a series of processes from the front of the vehicle up to the vicinity of a C-pillar 44, via an A-pillar 42 and the roof rail 41 constituting both side end portions of a roof 43. It should be noted that the roof rail 41 may continue smoothly to a D-pillar (not depicted) in the case of an estate car or a 5-door saloon car, etc., and the series of painting processes goes as far as the D-pillar in such a case.

Furthermore, the main scanning direction of the painting head 30 is a direction running from the A-pillar 42 on the vehicle front side on the left toward a vehicle rear side on the right in fig. 4. The main scanning direction will be described below with the aid of fig. 5 and 6.

Fig. 5 shows a state in which the painting head 30 is painting a portion of the roof rail 41 in fig. 4. It should be noted that fig. 5 shows only the painting head 30, omitting the tip end portion 24 that supports the painting head 30. As shown in fig. 5, during normal painting, the painting head 30 performs the painting so that a lateral direction constitutes a longitudinal direction in relation to a direction of movement of the painting head 30. In other words, the painting head 30 performs painting while moving along the short-side direction of the painting head 30.

It should be noted that, in the description below, the "main scanning direction" denotes the direction in which the painting head 30 is moved in order to perform painting, regardless of whether this direction is the short-side direction of the painting head 30, the longitudinal direction thereof, or another angle.

Referring back to fig. 4, when the painting head 30 performs painting in the main scanning direction from the A-pillar 42 along the roof rail 41, there is potential interference between the painting head 30 and the B-pillar 45 at the orientation shown in fig. 5 where the short-side direction of the painting head 30 is the main scanning direction (S1). Furthermore, it is also possible that a portion of the painting head 30 will come close to a painting area while other parts thereof are remote from the painting area. In such a case, there is a possibility of a drop in painting quality due to deflection of liquid drops, etc. when the painting area is distant.

Although this is no particular problem on the upper face and side faces of the roof rail 41, the possibility becomes more marked when painting is performed around a lower face 47.

The head control unit 6 thus performs tilt control (S2-S5), as shown in fig. 6, in order to tilt the painting head 30 through approximately 90° , and the roof rail 41 is painted in the main scanning direction in that state (S6). As will be clear from comparing fig. 5 and fig. 6, the painting head 30 protrudes below the roof rail 41 to a lesser extent in the case of fig. 6, where painting is performed with the longitudinal direction of the painting head 30 constituting the main scanning direction. Furthermore, a smaller part of the painting head 30 is remote from the painting area, reducing the areas where painting quality decreases due to deflection of liquid drops, etc.

As a result, when the painting head 30 is set at the orientation shown in fig. 6 by means of tilt control, rather than the orientation shown in fig. 5, the painting head 30 can be moved around further to the lower face 47 of the roof rail 41, even if the B-pillar 45 forms an obstruction. Accordingly, the painting head 30 can be brought closer to the roof rail 41, making it possible to suppress a drop in painting resolution proportionately, and in proportion to the area of the painting head 30 which can be brought closer.

### [Operation of tilt control]

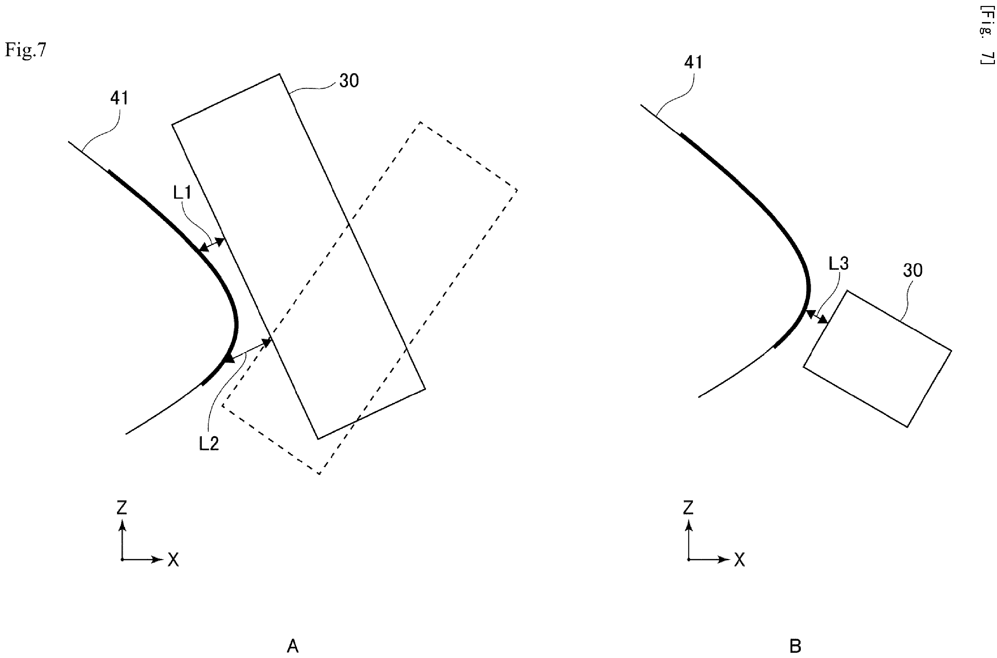

Suppressing a reduction in painting resolution by performing tilt control of the painting head 30 will be described here with reference to fig. 7. Fig. 7 is an outline diagram showing the effect afforded by tilt control of the painting head 30 of the painting robot 10 according to the embodiment.

Fig. 7A and B both schematically show the roof rail 41, where the roof rail 41 has been cut on a section plane in the lateral direction of the vehicle, looking back from the front of the vehicle in a direction parallel to the roof rail 41. The curved thin line is the roof rail 41, and the thick line following the thin line indicates a paint film.

Furthermore, the rectangular member is the painting head 30, with the tip end portion 24 and the robot arm 23, etc. which support the painting head 30 being omitted. Fig. 7 is merely an outline diagram, and it goes without saying that the roof rail 41 and the painting head 30, etc. are not limited to the shapes depicted.

As shown in fig. 7A, when painting is performed with the short-side direction of the painting head 30, which is a direction perpendicular to the longitudinal direction thereof, as the main scanning direction, then the longitudinal direction will extend in the lateral direction with respect to the main scanning direction. In this state, a large area can be painted with a single painting cycle, but it is difficult to make the painting head 30 follow the lower face 47 in particular. Accordingly, the painting head 30 is unaffected by obstructions such as the B-pillar 45 on the oblique upper face of the roof rail 41, so a relatively small distance L1 can be achieved between an ejection face of the painting head 30 and the object CM being painted, and a high resolution can be maintained.

Meanwhile, a distance L2 between the ejection face of the painting head 30 and the object CM being painted becomes larger at the lower face 47 of the roof rail 41, even with the ejection face of the same painting head 30 at the same angle as when the upper face of the roof rail 41 is painted, and it is difficult to maintain the desired resolution.

It therefore becomes necessary to bring the distance between the painting head 30 and the object CM being painted closer to L1 from L2 by pivoting the painting head 30 gradually clockwise on the page from the state shown by the solid line in fig. 7A until it is pivoted to the state shown by the broken line, but this makes interference more likely between the painting head 30 and obstructions such as the B-pillar 45.

Furthermore, pivoting the painting head 30 increases pressure fluctuations (the head pressure difference) within the painting head 30, therefore leading to the possibility that liquid drops will no longer be ejected from the nozzles 32.

Fig. 7B shows a state in which the painting head 30 in the state indicated by the broken line in fig. 7A has been tilted by means of tilt control. In fig. 7B, the longitudinal direction of the painting head 30 is the main scanning direction, so it is the side face in the short-side direction of the painting head 30 which is shown on the page in fig. 7B. In this case, a distance L3 between the painting head 30 and the roof rail 41 which is the object CM being painted can still be made relatively small, even when the painting head 30 is moved down and around in order to paint the lower face 47 of the roof rail 41. Furthermore, as is also clear from the difference between the lower end portion area of the painting head 30 shown by the broken line in fig. 7A and the lower end portion area of the painting head 30 shown by the solid line in fig. 7B, the lower face 47 can be painted more accurately while avoiding interference with obstructions by performing tilt control of the painting head 30. There is also a reduction in pressure fluctuations (the head pressure difference) within the painting head 30 because the painting head 30 is pivoted by a smaller amount, etc., and it is possible to reduce the problem of non-ejection from the nozzles 32.

### [Nozzle arrangement and tilt angle]

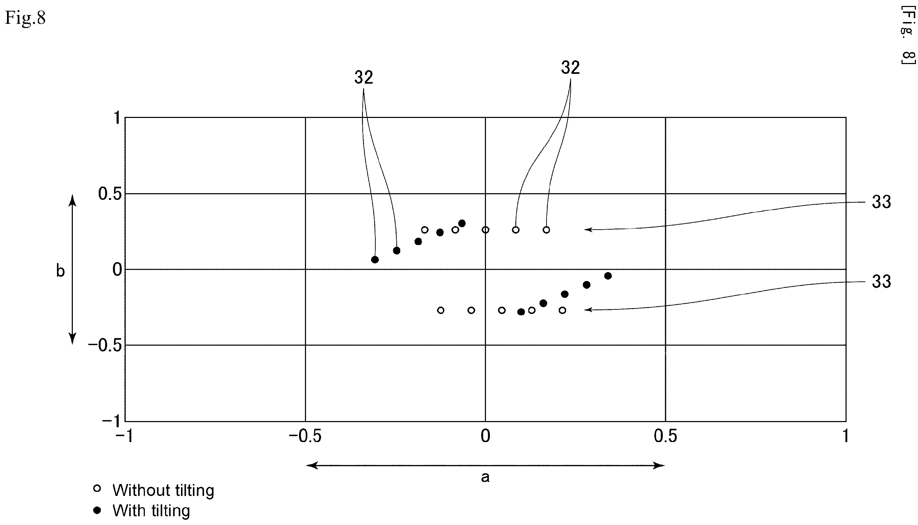

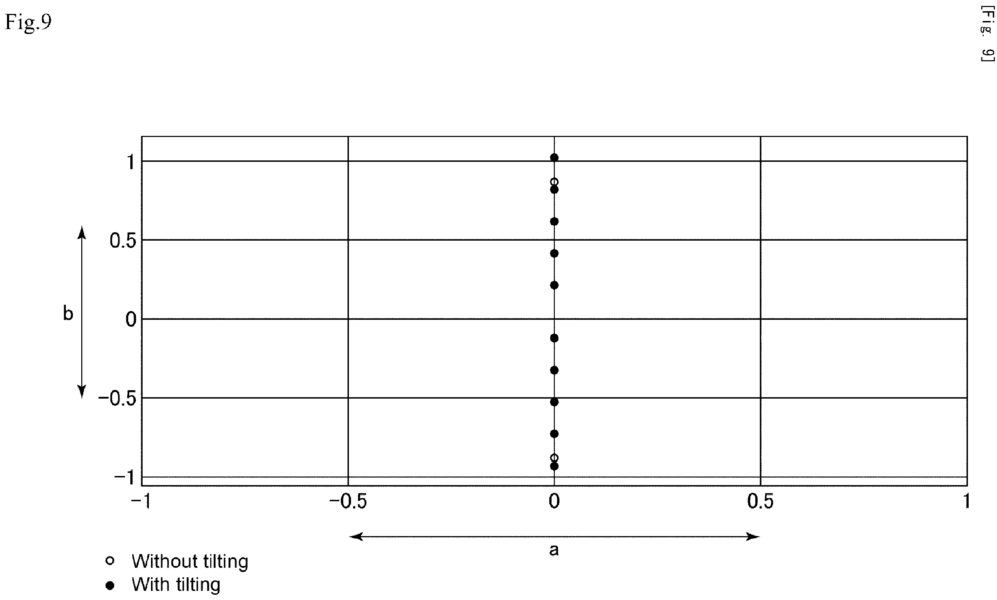

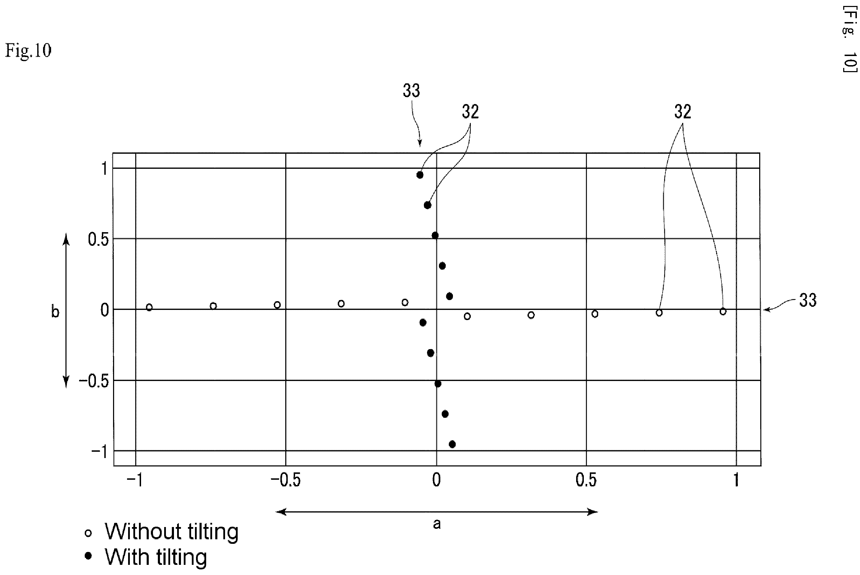

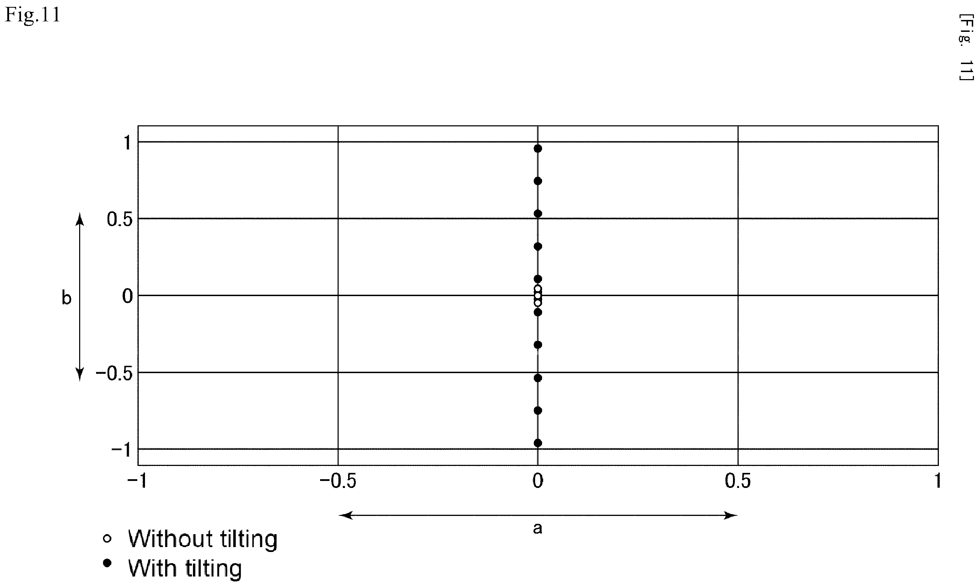

A relationship between nozzle arrangement and a suitable tilt angle will be described next with reference to fig. 8-11. Fig. 8 is an explanatory diagram showing, in a simplified manner, the form in which paint from a first painting head of the painting robot 10 according to the embodiment lands, depending on whether or not tilt control is performed. Fig. 9 is an explanatory diagram showing how painting resolution is affected by performing or not performing tilt control of the first painting head of the painting robot 10 according to the embodiment. Fig. 10 is an explanatory diagram showing, in a simplified manner, the form in which paint from a second painting head of the painting robot 10 according to the embodiment lands, depending on whether or not tilt control is performed. Fig. 11 is an explanatory diagram showing how painting resolution is affected by performing or not performing tilt control of the second painting head of the painting robot 10 according to the embodiment.

In the following description, the painting head 30 according to the embodiment will be divided into two types of painting head: a first painting head and a second painting head, and the first painting head will be used for the description in fig. 8 and 9 while the second painting head will be used for the description in fig. 10 and 11. The difference between the first painting head and the second painting head lies in the nozzle arrangement of the paint ejection nozzles 32 which are arranged with fixed regularity inside the head.

The pages with fig. 8 and 9 show a situation in which paint has landed in a state in which the first painting head or the second painting head is static. The pages with fig. 9 and 10 show a situation in which the paint has landed on an axis at zero in a direction a while the first painting head or the second painting head is being moved in the main scanning direction.

The first painting head will be described first of all with reference to fig. 8 and 9. The first painting head comprises nozzle rows 33 arranged at a predetermined pitch in the direction a, as shown by the white circles. Furthermore, two adjacent nozzle rows 33 in a direction b are offset in the direction a by a difference of half of the pitch of the nozzles 32 which are adjacent in the direction a.

It should be noted that multiple nozzles 32 are arranged in the direction a and the direction b on the actual ejection face so that a greater number of dots of liquid drops are ejected than the number of dots of liquid drops depicted, but fig. 8 shows only two nozzle rows 33 each comprising five nozzles 32 from left to right, for ease of comprehension.

In the state shown in fig. 8, when the direction to the right on the page is the main scanning direction, i.e., the direction of painting, then if the nozzles 32 denoted by the white circles in fig. 8 eject paint only on the axis at zero in the direction a in fig. 9, the white circles land in two locations which are symmetrical (close to ±0.26) along the direction b in fig. 9. If this occurs with all of the nozzles 32 which are not depicted, then there will be a considerable drop in painting resolution.

Let us now consider a case in which the first painting head is tilted 40° anticlockwise by means of tilt control, for example. If the first painting head is tilted so that all of the white circles are pivoted 40° anticlockwise in fig. 8, then a state is achieved in which the black circles are tilted by 40° from both the direction a and the direction b. The first painting head is then moved in the main scanning direction. In fig. 9, if paint is ejected only on the axis at zero in the direction a in the same way as before, then the black circles land uniformly in the direction b along the axis at zero in the direction a in fig. 9. If this occurs with all of the nozzles 32 which are not depicted, then there is no large drop in painting resolution and it is possible to suppress a reduction in painting resolution.

The second painting head will be described next with reference to fig. 10 and 11.

The second painting head comprises nozzle rows 33 arranged at a predetermined pitch in the direction a and substantially at zero in the direction b, as shown by the white circles. Furthermore, the nozzle rows 33 are substantially at zero in the direction b, but slightly inclined so as to be arranged with point symmetry about an origin at zero in the direction a and the direction b.

It should be noted that multiple nozzles 32 are arranged in the direction a and the direction b on the actual ejection face so that a greater number of dots of liquid drops are ejected than the number of dots of liquid drops depicted, but fig. 10 shows only one nozzle row 33 comprising ten nozzles 32 from left to right on the axis substantially at zero in the direction b, for ease of comprehension.

In the state shown in fig. 10, when the direction to the right on the page is the main scanning direction, then if the nozzles 32 denoted by the white circles eject paint on the axis at zero in the direction a in fig. 11, the white circles are concentrated close to zero in the direction b in fig. 11. If this occurs with all of the nozzles 32 which are not depicted, then there will be a considerable drop in painting resolution.

Let us now consider a case in which the second painting head is tilted 70° clockwise by means of tilt control, for example. In this state, if all of the white circles in fig. 10 are tilted 70° clockwise, then these become the black circles. The second painting head is then moved in the main scanning direction. In fig. 11, if paint is ejected on the axis at zero in the direction a in the same way as before, then the black circles land at a uniform pitch in the direction b on the axis at zero in the direction a in fig. 11. If this occurs with all of the nozzles 32 which are not depicted, then there is no large drop in painting resolution and it is possible to suppress a reduction in painting resolution.

A considerable reduction in painting resolution can be suppressed if the distances between the nozzles in the nozzle row 33 are uniform in the direction b, as with the black circles in fig. 9 and 11. That is to say, the tilt angle at which the painting resolution is equal to or greater than a permitted resolution can be said to be a tilt angle of the painting head such that the distances between adjacent nozzles in a given nozzle row 33 are uniform in the direction b.

The painting resolution thus cannot be defined simply by the tilt angle of the painting head 30. That is to say, nozzle arrangements vary according to the type of painting head 30 being used, so the tilt angle range that will enable a drop in painting resolution to be suppressed will be determined for each painting head 30.

Specifically, it is necessary to define a relationship between tilt angle and painting resolution for each painting head 30, as stated in regard to step S3 in the flowchart of fig. 3, indicating that: "The permitted resolution is a resolution sufficient to be capable of satisfying the required specification, and is set in advance by means of experimentation, etc.". When there is an obstruction in front of the painting head 30, the tilt angle enabling a drop in painting resolution of the painting head 30 currently being used to be suppressed is then calculated.

### [Actual example of the effect of tilt control]

The change in painting resolution afforded by tilt control of the painting head will be described.

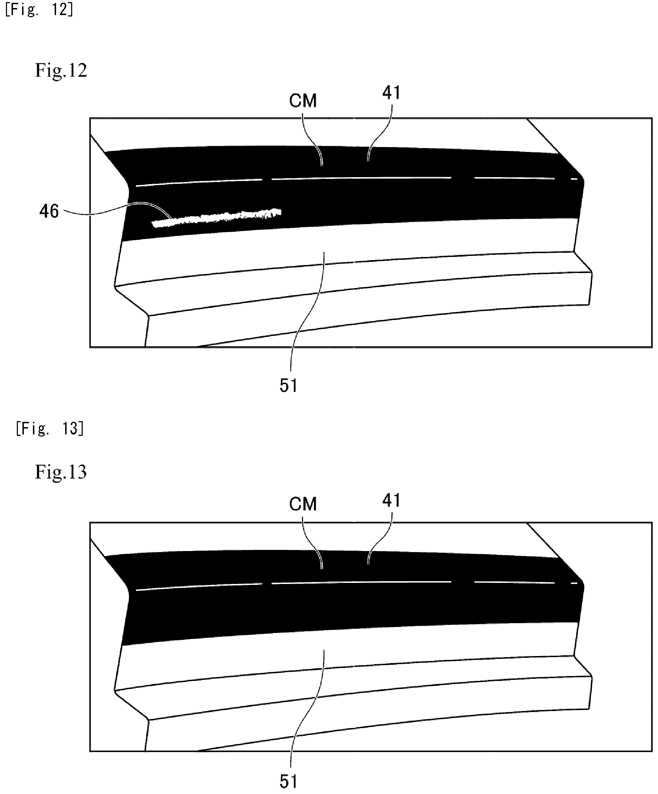

Fig. 12 shows a state after the roof rail 41 has been painted using the painting head 30. The black part is the object CM being painted, and the grey part is the part not being painted. In fig. 12, a white line stripe 46 is formed in the black part, and this is a part where a paint film was not formed by the painting. That part lies in a location set back from the painting head 30, so it is difficult to reduce the distance between the painting head 30 and the object CM being painted. The increased painting distance is thought to cause a reduction in painting quality.

Fig. 13 shows a state after the roof rail 41 has been painted using the painting head 30 with tilt control. Although the viewing angle is different from that of fig. 12, no painting unevenness is produced, and it can be said that a permitted painting resolution can be achieved.

### [Advantages]

The embodiment above demonstrates the following advantages.

The painting robot comprises: an elongate painting head 30 for painting an object CM being painted while moving in a predetermined direction, the painting head 30 having a plurality of nozzle rows 33 formed by a plurality of nozzles 32 for ejecting paint; an arm control unit 2 for controlling operation of a robot arm 23 which has the painting head 30 mounted on a tip end thereof and causes the painting head 30 to move to a desired position; and a head control unit 6 for controlling tilting of the painting head 30, the head control unit 6 performing tilt control to tilt the painting head 30 until a direction of movement of the painting head 30 shifts from a short-side direction of the painting head 30 to a longitudinal direction thereof.

This enables the painting head 30 to be tilted to a tilt angle enabling painting to be continued while preventing interference with obstructions. It is therefore possible to maintain painting quality also at locations where the nozzle face cannot be brought sufficiently close.

Furthermore, in the embodiment, tilt control is implemented while the painting head 30 is moving so that the painting head 30 follows the shape of the object CM being painted.

By this means, the painting head 30 is tilted so that the painting head 30 follows the shape of the object CM being painted, and parts where the shape of the object CM being painted are close to the painting head 30 can also be painted without the object CM being painted and the painting head 30 colliding. Accordingly, it is possible to shorten the cycle time as compared to a case in which only the parts where the shape of the object CM being painted is close to the painting head 30 are painted separately afterwards.

Furthermore, in the embodiment, the head control unit 6 calculates a tilt angle of the painting head 30 at which the painting resolution will be equal to or greater than a predetermined permitted resolution, based on the arrangement of the nozzle rows 33 on the painting head 30, and performs the tilt control of the painting head 30 on the basis of the calculation result therefrom.

As a result, a reduction in resolution can be prevented when the painting head 30 is tilted in order to prevent interference between the painting head 30 and an obstruction.

Furthermore, in the embodiment, the head control unit 6 paints the object CM being painted multiple times when there is no tilt angle of the painting head 30 at which the painting resolution will be equal to or greater than the permitted resolution.

By this means, even if a painting resolution equal to or greater than the permitted resolution cannot be achieved, the object CM being painted is painted multiple times, thereby enabling a painting resolution equal to or greater than the permitted resolution to be achieved.

Furthermore, in the embodiment, the head control unit 6 calculates the tilt angle of the painting head 30 so as to achieve uniform distances between the nozzles 32, in the nozzle rows 33, which are adjacent in a direction perpendicular to the direction of movement of the painting head 30, and performs the tilt control on the basis of the calculation result therefrom.

As a result, when the painting head 30 is moved, a reduction in resolution can be prevented because the nozzles 32 are aligned in a direction perpendicular to the movement direction.

Furthermore, in the embodiment, the head control unit 6 calculates a tilt angle range of the painting head 30 required to avoid interference between the painting head 30 and an obstruction, and calculates the tilt angle of the painting head 30 so that the distances are most uniform within the tilt angle range.

By this means, the tilt angle of the painting head 30 can be calculated more accurately while avoiding interference with an obstruction, and a reduction in resolution can therefore be prevented while avoiding interference more reliably.

Furthermore, in the embodiment, the object CM being painted is the vehicle body FR.

As a result, even in the case of painting the vehicle body FR, which has numerous areas that interfere with the painting head 30, it is still possible to prevent a reduction in resolution in those areas being painted.

The embodiments described above all merely illustrate preferred specific examples of the present invention. The numerical values, components, and arrangement locations and ordering of connection configurations of the components, etc. which are given in the embodiments above are merely examples and are not intended to limit the present invention. Furthermore, the drawings are not necessarily strict depictions.

Embodiments of the present invention were described above, but those embodiments merely illustrate some examples of application of the present invention, and are not intended to limit the technical scope of the present invention to the specific configurations of the embodiments.

For example, in step S2 of the embodiment, the relationship between tilt angle and distance from obstructions may be obtained in advance by the main control unit 1 by means of experimentation and stored in the memory unit 4, in order to calculate a tilt angle that will enable an obstruction to be avoided, but locations where liquid drops will land are preferably also simulated and indexed in conjunction with a robot trajectory simulation, the tilt angle then being determined while considering whether painting is possible at the desired resolution (S3, S4).

Furthermore, in the embodiment, operations during tilt control of the painting head 30 were described in a simplified manner with the aid of fig. 7, but the operations of the painting head 30 may equally be performed by means of robot teaching-based control.

In addition, in the embodiment, when painting is performed by means of tilt control (S2-S5), that is, when the painting head 30 performs painting while tilted by a predetermined angle, the area of the nozzle-forming face from which the paint is ejected may be set in accordance with the angle, or paint may be ejected from all of the nozzles 32 during tilt control.

### [Key to Symbols]

- 2: Arm control unit
- 6: Head control unit
- 10: Painting robot
- 23: Robot arm
- 30: Painting head
- 32: Nozzle
- 33: Nozzle row

## Claims

1. Painting robot comprising: an elongate painting head for painting an object being painted while moving in a predetermined direction, the painting head having a plurality of nozzle rows formed by a plurality of nozzles for ejecting paint;
an arm control unit for controlling operation of a robot arm which has the painting head mounted on a tip end thereof and causes the painting head to move to a desired position, and causes the painting head to move in a main scanning direction during painting; and
a head control unit for controlling tilting of the painting head, wherein
the head control unit
performs tilt control to tilt the painting head until a direction of movement of the painting head shifts from a short-side direction of the painting head to a longitudinal direction thereof, without changing the main scanning direction, and wherein
the head control unit calculates a tilt angle of the painting head at which a painting resolution will be equal to or greater than a predetermined permitted resolution, based on an arrangement of the nozzle rows on the painting head, and performs the tilt control of the painting head on the basis of a calculation result therefrom.

2. Painting robot according to Claim 1, **characterized in that**
the tilt control is performed while the painting head is moving so that the painting head follows the shape of the object being painted.

3. Painting robot according to any preceding Claim, **characterized in that**
the head control unit paints the object being painted multiple times when there is no tilt angle of the painting head at which the painting resolution will be equal to or greater than the permitted resolution.

4. Painting robot according to any preceding Claim, **characterized in that**
the head control unit calculates the tilt angle of the painting head so as to achieve uniform distances between nozzles, in the nozzle rows, which are adjacent in a direction perpendicular to the direction of movement of the painting head, and performs the tilt control on the basis of a calculation result therefrom.

5. Painting robot according to Claim 4, **characterized in that**
the head control unit calculates a tilt angle range of the painting head required to avoid interference between the painting head and an obstruction, and calculates the tilt angle of the painting head so that the distances are most uniform within the tilt angle range.

6. Painting robot according to any of Claims 1 to 5, **characterized in that**
the object being painted is a vehicle body.

## Patentansprüche

1. Lackierroboter, der Folgendes umfasst: einen länglichen Lackierkopf zum Lackieren eines Objekts, das lackiert wird, während es sich in eine vorgegebene Richtung bewegt, wobei der Lackierkopf mehrere Düsenreihen aufweist, die aus mehreren Düsen zum Ausstoßen von Farbe gebildet sind;
eine Armsteuereinheit zum Steuern des Betriebs eines Roboterarms, der den Lackierkopf an einem Spitzenende davon montiert hat und bewirkt, dass sich der Lackierkopf in eine gewünschte Position bewegt, und bewirkt, dass sich der Lackierkopf während des Lackierens in eine Hauptabtastrichtung bewegt; und
eine Kopfsteuereinheit zur Steuerung der Neigung des Lackierkopfs, wobei
die Kopfsteuereinheit
eine Neigungssteuerung durchführt, um den Lackierkopf zu neigen, bis sich eine Bewegungsrichtung des Lackierkopfs von einer kurzseitigen Richtung des Lackierkopfs in eine Längsrichtung desselben verschiebt, ohne die Hauptabtastrichtung zu ändern, und wobei
die Kopfsteuereinheit anhand einer Anordnung der Düsenreihen am Lackierkopf einen Neigungswinkel des Lackierkopfs berechnet, bei dem eine Lackierauflösung gleich oder größer als eine vorgegebene zulässige Auflösung sein wird, und anhand eines daraus resultierenden Berechnungsergebnisses die Neigungssteuerung des Lackierkopfs durchführt.

2. Lackierroboter nach Anspruch 1, **dadurch gekennzeichnet, dass**
die Neigungssteuerung während der Bewegung des Lackierkopfs erfolgt, so dass der Lackierkopf der Form des zu lackierenden Objekts folgt.

3. Lackierroboter nach einem der vorhergehenden Ansprüche, **dadurch gekennzeichnet, dass**
die Kopfsteuereinheit das zu lackierende Objekt mehrfach lackiert, wenn kein Neigungswinkel des Lackierkopfs vorliegt, bei dem die Lackauflösung gleich oder größer als die zulässige Auflösung sein wird.

4. Lackierroboter nach einem der vorhergehenden Ansprüche, **dadurch gekennzeichnet, dass**
die Kopfsteuereinheit den Neigungswinkel des Lackierkopfs berechnet, um gleichmäßige Abstände zwischen den Düsen in den Düsenreihen zu erreichen, die in eine Richtung senkrecht zur Bewegungsrichtung des Lackierkopfs benachbart sind, und die Neigungssteuerung anhand eines daraus resultierenden Berechnungsergebnisses durchführt.

5. Lackierroboter nach Anspruch 4, **dadurch gekennzeichnet, dass**
die Kopfsteuereinheit einen Neigungswinkelbereich des Lackierkopfs berechnet, der erforderlich ist, um Störungen zwischen dem Lackierkopf und einem Hindernis zu vermeiden, und den Neigungswinkel des Lackierkopfs berechnet, so dass die Abstände innerhalb des Neigungswinkelbereichs am gleichmäßigsten sind.

6. Lackierroboter nach einem der Ansprüche 1 bis 5, **dadurch gekennzeichnet, dass**
das zu lackierende Objekt eine Fahrzeugkarosserie ist.

## Revendications

1. Robot peintre, comprenant : une tête de peinture oblongue destinée à peindre un objet en train d'être peint tout en se mouvant dans une direction prédéterminée, la tête de peinture ayant une pluralité de rangées de buses formées par une pluralité de buses destinées à éjecter de la peinture ;
une unité de commande de bras destinée à commander le fonctionnement d'un bras de robot qui a la tête de peinture montée sur une extrémité de bout de celui-ci et amène la tête de peinture à se mouvoir jusqu'à une position souhaitée, et amène la tête de peinture à se mouvoir dans une direction de balayage principale durant la peinture ; et
une unité de commande de tête destinée à commander l'inclinaison de la tête de peinture, dans lequel
l'unité de commande de tête
réalise une commande d'inclinaison pour incliner la tête de peinture jusqu'à ce qu'une direction de mouvement de la tête de peinture passe d'une direction de côté court de la tête de peinture à une direction longitudinale de celle-ci, sans changer la direction de balayage principale, et dans lequel
l'unité de commande de tête calcule un angle d'inclinaison de la tête de peinture auquel une résolution de peinture sera égale ou supérieure à une résolution permise prédéterminée, sur la base d'un agencement des rangées de buses sur la tête de peinture, et réalise la commande d'inclinaison de la tête de peinture sur la base d'un résultat de calcul de celui-ci.

2. Robot peintre selon la revendication 1, **caractérisé en ce que**
la commande d'inclinaison est réalisée alors que la tête de peinture est en train de se mouvoir de telle sorte que la tête de peinture suit la forme de l'objet en train d'être peint.

3. Robot peintre selon une quelconque revendication précédente, **caractérisé en ce que**
l'unité de commande de tête peint l'objet en train d'être peint de multiples fois lorsqu'il n'y a aucun angle d'inclinaison de la tête de peinture auquel la résolution de peinture sera égale ou supérieure à la résolution permise.

4. Robot peintre selon une quelconque revendication précédente, **caractérisé en ce que**
l'unité de commande de tête calcule l'angle d'inclinaison de la tête de peinture afin d'obtenir des distances uniformes entre des buses, dans les rangées de buses, qui sont adjacentes dans une direction perpendiculaire à la direction de mouvement de la tête de peinture, et réalise la commande d'inclinaison sur la base d'un résultat de calcul de celui-ci.

5. Robot peintre selon la revendication 4, **caractérisé en ce que**
l'unité de commande de tête calcule une plage d'angle d'inclinaison de la tête de peinture nécessaire pour éviter une interférence entre la tête de peinture et une obstruction, et calcule l'angle d'inclinaison de la tête de peinture de telle sorte que les distances sont les plus uniformes dans les limites de la plage d'angle d'inclinaison.

6. Robot peintre selon de quelconques des revendications 1 à 5, **caractérisé en ce que** l'objet en train d'être peint est une carrosserie de véhicule.
